(19) Europäisches Patentamt

European Patent Office

Office européen des brevets

(11) **EP 3 452 850 B1**

(12) **FASCICULE DE BREVET EUROPEEN**

(45) Date de publication et mention de la délivrance du brevet:
**10.06.2020 Bulletin 2020/24**

(21) Numéro de dépôt: **17720152.2**

(22) Date de dépôt: **02.05.2017**

(51) Int Cl.:
**G01T 3/06** (2006.01)

(86) Numéro de dépôt international:
**PCT/EP2017/060416**

(87) Numéro de publication internationale:
**WO 2017/191133 (09.11.2017 Gazette 2017/45)**

(54) **DETECTEUR DE NEUTRONS, A PLASTIQUE SCINTILLANT, ENTOURANT UN COEUR DE GADOLINIUM OU DE CADMIUM, ET COUVERTURE SCINTILLANTE DOPEE OU COUVERTE PAR DU BORE OU DU LITHIUM, ET DISPOSITIF DE COMPTAGE DE NEUTRONS ASSOCIE**

NEUTRONENDETEKTOR MIT GLÄNZENDEM KUNSTSTOFF UM EINEN GADOLINIUM- ODER CADMIUMKERN HERUM UND MIT BOR ODER LITHIUM DOTIERTE ODER ÜBERZOGENE GLÄNZENDE ABDECKUNG SOWIE ZUGEHÖRIGE NEUTRONENZÄHLVORRICHTUNG

NEUTRON DETECTOR, WITH SCINTILLATING PLASTIC, SURROUNDING A GADOLINIUM OR CADMIUM CORE, AND SCINTILLATING COVER DOPED OR COVERED BY BORON OR LITHIUM, AND ASSOCIATED NEUTRON COUNTING DEVICE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **04.05.2016 FR 1654066**

(43) Date de publication de la demande:
**13.03.2019 Bulletin 2019/11**

(73) Titulaire: **COMMISSARIAT À L'ÉNERGIE ATOMIQUE ET AUX ÉNERGIES ALTERNATIVES**
**75015 Paris (FR)**

(72) Inventeurs:
• **COULON, Romain**
  **58400 Chaulgnes (FR)**
• **DUMAZERT, Jonathan**
  **30100 Ales (FR)**
• **CARREL, Frédérick**
  **91190 Gif-Sur-Yvette (FR)**
• **HAMEL, Matthieu**
  **50100 Cherbourg-Octeville (FR)**

(74) Mandataire: **Brevalex**
  **95, rue d'Amsterdam**
  **75378 Paris Cedex 8 (FR)**

(56) Documents cités:
EP-A2- 1 081 509     WO-A1-2011/012154
WO-A1-2013/121191    US-A- 3 382 363

• DUMAZERT JONATHAN ET AL: "Compensated gadolinium-loaded plastic scintillators for thermal neutron detection and counting", 2015 4TH INTERNATIONAL CONFERENCE ON ADVANCEMENTS IN NUCLEAR INSTRUMENTATION MEASUREMENT METHODS AND THEIR APPLICATIONS (ANIMMA), IEEE, 20 avril 2015 (2015-04-20), pages 1-9, XP032897877, DOI: 10.1109/ANIMMA.2015.7465523

**Description**

**DOMAINE TECHNIQUE**

La présente invention concerne un détecteur de neutrons, à plastique scintillant, entourant un cœur de gadolinium ou de cadmium, ainsi qu'un dispositif de comptage de neutrons utilisant ce détecteur.

Elle trouve des applications dans le domaine de la mesure nucléaire, et s'applique plus spécifiquement à la détection de sources de neutrons et à la dosimétrie des neutrons. Le dispositif de comptage, objet de l'invention, permet le traitement de tout type de spectre neutronique en vue de répondre aux enjeux industriels et de sécurité suivants :

- le suivi de criticité neutronique sur les infrastructures nucléaires, notamment dans la fabrication et le conditionnement de la matière fissile, destinée aux chaudières nucléaires (par exemple celles qui sont utilisées pour la production d'électricité ou la propulsion navale) ;

- le suivi opérationnel du débit de dose neutronique en radioprotection nucléaire (l'invention constituant alors une alternative aux systèmes du type des sphères de Bonner à hélium-3) ;

- la détection de matière radiologique (notamment pour la lutte contre la menace de type « bombe sale », et la lutte contre la prolifération d'armements nucléaires), en mettant plus particulièrement en œuvre l'invention dans les balises de sécurité qui sont installées aux frontières et dans les lieux publics.

Le gadolinium et le cadmium présentent les sections efficaces de capture neutronique les plus importantes dans l'inventaire des isotopes stables. Toutefois, ils sont peu exploités en détection, en raison de la nature radiative de la capture qui ne permet aucune discrimination vis-à-vis de l'ambiance naturelle, par différentiation de la densité du dépôt d'énergie des particules secondaires (contrairement aux captures ioniques de $^3$He, $^{10}$B, $^6$Li). Toutefois, au cours de la désexcitation du noyau absorbeur, des rayonnements gamma de haute énergie, de l'ordre de 3 MeV à 8 MeV, sont émis. A l'intérieur d'un scintillateur plastique convenablement dimensionné, ils peuvent conduire à un dépôt énergétique de l'ordre de 3 MeV à 4 MeV, voire plus. Or, un seuil d'amplitude énergétique, placé à 3 MeV ou 4 MeV, permet de discriminer en amplitude les neutrons rapides de fission, refroidis dans un polymère de thermalisation, vis-à-vis de l'ambiance photonique de radioactivité naturelle, dépassant la valeur des rayons gamma les plus énergétiques de la chaîne de désintégration du thorium 232.

Indiquons dès à présent que la conception d'un système ternaire, conforme à l'invention, au sein duquel un cœur chargé en élément gadolinium ou cadmium, plein ou creux (et comportant dans ce dernier cas, à l'intérieur du cœur, si celui-ci n'est pas vide, par exemple et non exhaustivement, un certain volume de thermaliseur hydrogéné, de plastique scintillant ou de scintillateur inorganique) est placé au centre d'une sphère de plastique scintillant, permet à la fois le ralentissement des neutrons incidents par la sphère, la capture des neutrons thermalisés par le cœur, et le dépôt d'une énergie supérieure au seuil en énergie, permettant de s'affranchir de la radioactivité naturelle.

Dans ce système ternaire, l'ensemble cœur-sphère est recouvert d'une troisième partie, formée d'une fine couche scintillante qui exploite la capture des neutrons par le bore ou le lithium, et produit un signal de scintillation dont la constante de temps est significativement supérieure à la constante de temps du scintillateur de la sphère, afin de permettre la mise en oeuvre d'une discrimination des deux voies de mesure par la forme des impulsions. L'utilisation de ces deux voies de mesure permet d'estimer une dose neutronique, avec une sensibilité de détection accrue, tout en garantissant la robustesse du système vis-à-vis des rayonnements gamma de haute énergie.

**ÉTAT DE LA TECHNIQUE ANTÉRIEURE**

Un détecteur exploitant la capture radiative du gadolinium a déjà été mis en œuvre dans les techniques divulguées par les documents suivants :

[1]J. Dumazert, R. Coulon, F. Carrel, F. Sguerra, E. Rohée, S. Normand, L. Méchin, M. Hamel, « Gadosphere : a high-scale plastic scintillator sphere with a metal gadolinium core for thermal neutron detection and counting », 2015 IEEE Nuclear Science Symposium and Medical Imaging Conference (NSS/MIC), San Diego, Etats-Unis, 1-7 novembre 2015

[2] WO 2011/012154**, « Apparatus and method for neutron detection by capture-gamma calorimetry », invention de G. Pausch et al.**

Ces techniques exploitent toutes deux le fait de disposer d'un convertisseur en gadolinium au sein d'un scintillateur plastique. Dans les deux cas, l'intérêt est de maximiser le signal de détection du signal « radiatif » par le dimensionnement du scintillateur plastique qui entoure le convertisseur. Ces deux techniques présentent des inconvénients :

- les mesures ne peuvent être effectuées dans une ambiance gamma de haute énergie, que l'on rencontre parfois dans certains environnements industriels ; et
- ces techniques ne permettent pas de fournir une mesure de dose neutronique.

**EXPOSÉ DE L'INVENTION**

La présente invention vise à remédier aux inconvénients des techniques divulguées par les documents [1] et [2], en accroissant, par là même, la compétitivité des solutions utilisant le gadolinium comme alternatives aux technologies fondées sur l'hélium 3.
Elle repose sur trois points clés :

- la mise en œuvre d'un scintillateur plastique, formant une coquille de préférence sphérique autour d'un cœur de gadolinium ou de cadmium (comme dans les documents [1] et [2]),
- la mise en œuvre d'un revêtement scintillant contenant du lithium ou du bore, et
- la mise en œuvre d'un traitement du signal par discrimination de forme d'impulsion, comptage, lissage, et estimation de la dose neutronique par un modèle pseudo-spectral.

Le mérite essentiel de la présente invention réside dans la possibilité d'avoir un système de mesure neutronique qui est économiquement compétitif, transportable, isotrope, robuste, et qui permet une mesure de la dose radiologique.
De façon précise, la présente invention a pour objet un détecteur de neutrons, comprenant :

- un cœur, riche en gadolinium ou en cadmium,
- une coquille en scintillateur plastique, qui enveloppe le cœur, et
- un dispositif de conversion de photons qui présente une interface avec la coquille et qui convertit les photons de scintillation, issus de la coquille, en un signal représentatif de ceux-ci,

caractérisé en ce qu'il comprend en outre une couche de scintillateur contenant du bore ou du lithium, qui entoure la coquille.
Cette couche de scintillateur contenant du bore ou du lithium peut être une couche de scintillateur plastique dopé au bore ou au lithium ou couvert de bore ou de lithium.
Selon un mode de réalisation préféré du dispositif, objet de l'invention, le cœur et la coquille sont sensiblement sphériques et sensiblement concentriques.
De préférence, l'épaisseur de la coquille est supérieure ou égale à 10 cm. Et l'épaisseur de la couche de scintillateur contenant du bore ou du lithium est de préférence inférieure ou égale à 2 mm.
Selon un mode de réalisation préféré de l'invention, le détecteur comprend en outre une première couche de diffuseur de lumière, interposée entre le cœur et la coquille.
De préférence, le détecteur comprend aussi une deuxième couche de diffuseur de lumière, entourant une couche de scintillateur contenant du bore ou du lithium.
Selon un premier mode de réalisation particulier de l'invention, le cœur est plein, ou le cœur est creux et comporte une zone interne qui est vide ou contient un matériau thermalisant, pour la thermalisation des neutrons.
Selon un deuxième mode de réalisation particulier, le cœur est creux et comporte une zone interne qui contient un matériau scintillateur.
De préférence, ce matériau scintillateur présente une constante de temps distincte d'une constante de temps de la coquille en scintillateur plastique et distincte d'une constante de temps de la couche de scintillateur contenant du bore ou du lithium. Le matériau scintillateur permet ainsi d'accéder à une troisième signature caractéristique.
Dans le deuxième mode de réalisation, le cœur peut comporter une couche contenant du gadolinium ou du cadmium et présentant au moins une ouverture permettant le passage de photons de scintillation émis par le matériau scintillateur. Cette couche peut éventuellement contenir exclusivement du gadolinium ou du cadmium. Elle forme une enveloppe pour le matériau scintillateur. La couche contenant du gadolinium ou du cadmium peut être sphérique. Avantageusement, elle présente un ensemble d'ouvertures réparties de manière homogène à sa surface pour permettre le passage d'un maximum de photons de scintillation émis par le matériau scintillateur.
La présente invention concerne aussi un dispositif de comptage de neutrons, notamment pour mesurer un débit de dose, comprenant :

- le détecteur de neutrons, objet de l'invention, et

- un dispositif de traitement de signal qui fournit un signal de comptage de neutrons, notamment un débit de dose, à partir d'un signal représentatif des photons de scintillation.

De préférence, le dispositif de traitement de signal comprend des moyens de discrimination de forme, de comptage et de lissage d'impulsions, et d'estimation de débit de dose neutronique au moyen d'un modèle pseudo-spectral.

## BRÈVE DESCRIPTION DES DESSINS

La présente invention sera mieux comprise à la lecture de la description d'exemples de réalisation donnés ci-après, à titre purement indicatif et nullement limitatif, en faisant référence aux dessins annexés sur lesquels :

- la figure 1 représente l'évolution du taux utile pour la détection $\tau_{Gd}$ (en coups par neutron) en fonction du rayon r (en cm) d'un cœur sphérique de gadolinium, pour une coquille scintillante sphérique de rayon R égal à 11,8 cm,
- la figure 2 représente l'évolution du taux utile pour la détection en fonction de la masse M (en g) du chargement en gadolinium pur, pour $R$ égal à 11,8 cm,
- la figure 3 représente l'évolution du taux utile pour la détection en fonction du coût C (en €) de chargement en gadolinium pur à 99,9%, pour $R$ égal à 11,8 cm,
- la figure 4 est une vue schématique, en coupe latérale, d'un mode de réalisation particulier du détecteur de neutrons, objet de l'invention,
- la figure 5 est une vue schématique d'un exemple du dispositif de traitement numérique associé au détecteur de la figure 4, et
- la figure 6 est un algorigramme relatif à une unité de traitement faisant partie du dispositif illustré par la figure 5.

## EXPOSÉ DÉTAILLÉ DE MODES DE RÉALISATION PARTICULIERS

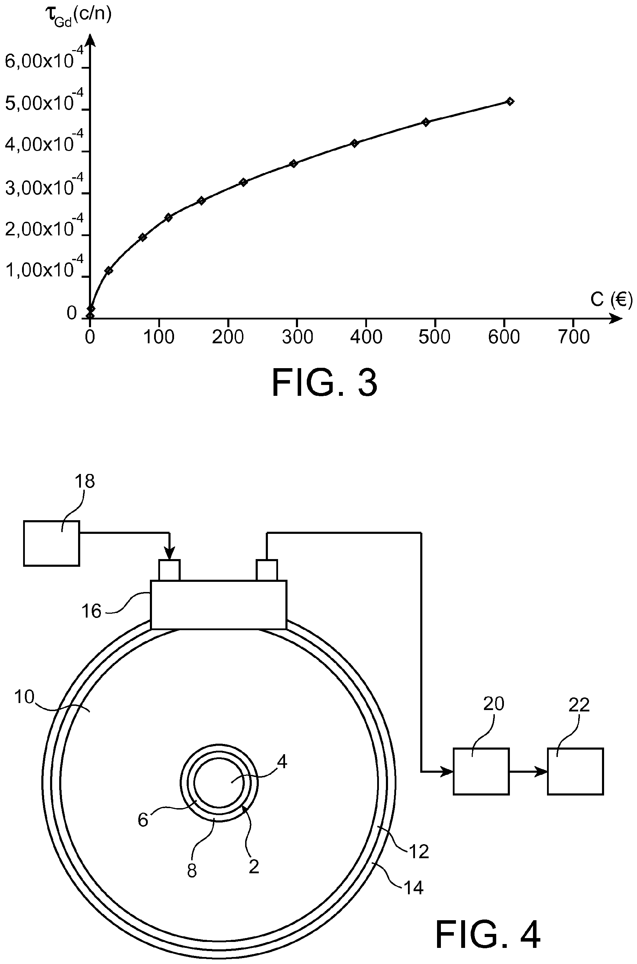

La validation du principe de la présente invention, technique concurrentielle de la technologie utilisant l'hélium-3, en termes de rapport sensibilité/coût, a été effectuée par simulation. On a fait usage du code MCNPX2.7, code de transport de particules dans la matière par une méthode probabiliste de type Monte-Carlo. A ce sujet, on se reportera au document suivant :
MCNPX User manual, Los Alamos Tech. rep., LA-CP-11-00438, 2011.
Ce programme fournit un historique complet de chaque corpuscule généré, qu'il soit source ou diffusé, jusqu'à ce que son énergie cinétique tombe sous une valeur de seuil, égale à 1 keV.
Dans la simulation, on fait le choix d'une géométrie sphérique, du genre de la vue en coupe représentée sur la figure 4 des dessins annexés : le cœur riche en gadolinium est une sphère pleine de rayon _r_, et le scintillateur plastique qui l'enserre est une coquille sphérique de rayon _R_. Les diffuseurs sont négligés dans la simulation, et l'on n'a pas tenu compte de la couche de scintillateur contenant du bore ou du lithium.
Afin de construire une référence en terme de sensibilité et de coût pour la technologie utilisant l'hélium-3, on a reproduit sous MCNPX le détecteur de Bonner qui a une géométrie similaire et dont les dimensions sont : _r_ = 1,15 cm et _R_ = 11,43 cm. Une source de californium 252 est simulée avec le jeu de constantes (_C, a, b_), où _a_ = 1,025 MeV, _b_ = 2,926 MeV$^{-1}$, _C_ = 0,3016, décrivant son spectre de Watt. La source est placée à une distance _D_ = 50 cm de la surface extérieure du détecteur. Une densité de 1,07 g.cm$^{-3}$ est fixée pour la coquille de scintillateur plastique.
Les données obtenues par MCPNX et notées « tally 4 », fournissent un taux de capture des neutrons de fission émis par la source, exprimé en capture/neutron (ca/n). Chaque capture d'un neutron par un noyau d'hélium-3 est décrite par l'équation (1) :

$$\,^3_2\mathrm{He} + \,^1_0 n \;\rightarrow\; \,^3_1\mathrm{H} + \,^1_1 p + 0{,}77 \text{ MeV (1)}$$

Le taux de capture ainsi obtenu représente directement le taux de détection, en coups par neutron (c/n), étant donné que les particules chargées, utiles à la détection, sont émises et déposent leur énergie dans le scintillateur de façon sûre et certaine. Le taux calculé s'élève à $\tau_{He}$ = (2,99 $\pm$ 0,06)x10$^{-5}$ c/n.
On considère dans un premier temps une bille de gadolinium naturel, avec une pureté théorique de 100%. Dans cette étude, le rayon _R_ de la coquille scintillante est pris égal à 11,8 cm. Le taux de capture radiative par les noyaux de gadolinium 157 (respectivement 155) du cœur est calculé au moyen du « tally 4 » et noté $\tau_{ca,157}$ (respectivement $\tau_{ca,155}$.) On limite le mesurande aux photons de scintillation induits par les dépôts énergétiques de rayonnements gamma d'énergie supérieure à 3 MeV, émis dans $P_{E_\gamma > 3 \text{ MeV},157}$ = 1,299 $\gamma$/ca (gamma/capture) des désexcitations radiatives de l'isotope 157 après capture, et $P_{E_\gamma > 3 \text{ MeV},155}$ = 0,2464 $\gamma$/ca des désexcitations radiatives de l'isotope 155 après capture.

Au moyen du « tally 8 » de MCNPX, on calcule, pour une distribution spatiale homogène de rayons gamma, générée dans le cœur riche en gadolinium, le taux de dépôt d'énergie supérieure à 3 MeV dans la coquille de scintillateur plastique, qui sera à l'origine du signal utile pour la détection ; ce dernier taux est noté $\tau_{D>3\text{ MeV},157}$ (respectivement $\tau_{D>3\text{ MeV},155}$) et exprimé en dépôts/gamma (d/γ). Le taux utile pour la détection, noté $\tau_{Gd}$ et exprimé en coups par neutron (c/n), est alors tel que :

$$\tau_{Gd} = \tau_{ca,157} \times P_{E_\gamma>3\text{ MeV},157} \times \tau_{D>3\text{ MeV},157} + \tau_{ca,155} \times P_{E_\gamma>3\text{ MeV},155} \times \tau_{D>3\text{ MeV},155} \quad (2)$$

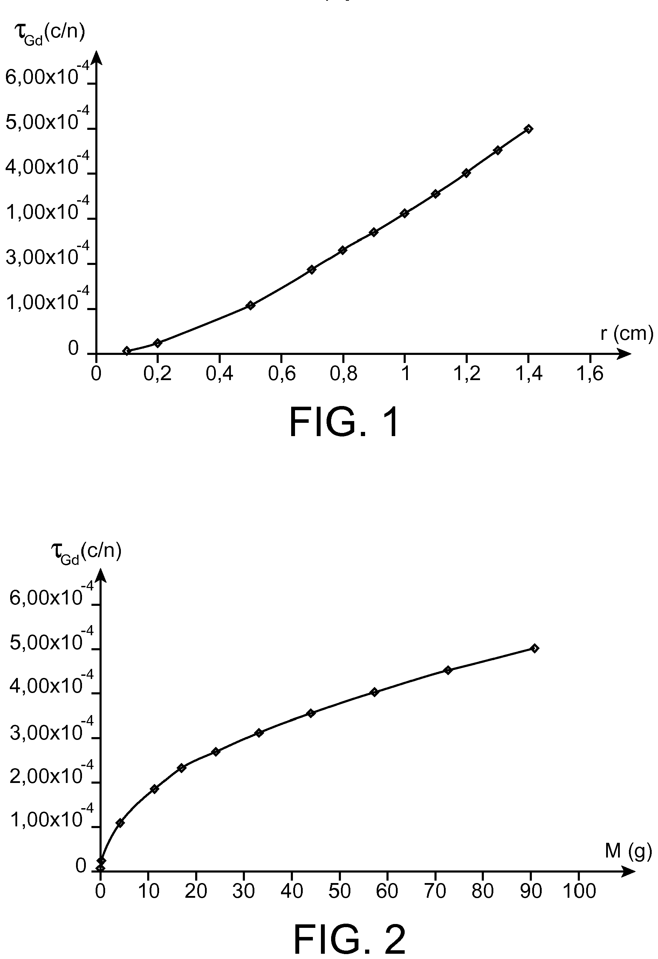

Ce dernier taux est évalué, pour la valeur de R donnée plus haut, en fonction de différentes valeurs de _r_, lesquelles conditionnent la masse du chargement en gadolinium pur et par conséquent le coût en matière première du capteur. Les valeurs de $\tau_{Gd}$ obtenues en fonction du rayon _r_ (cm) de la sphère interne de gadolinium, de la masse M(g) de gadolinium et du coût d'achat C (€) du gadolinium à une pureté de 99,9% sont respectivement portés sur les figures 1, 2 et 3 des dessins annexés. Le coût primaire du capteur doit être complété par le coût des composants de la coquille de scintillateur plastique, faite de styrène qui est commercialement disponible à un prix d'environ 10 € par litre, soit ici approximativement 60 € supplémentaires.

Les courbes caractéristiques obtenues montrent qu'à partir d'une valeur d'environ 0,25 cm pour _r_, correspondant à un coût négligeable devant celui du styrène, on atteint un taux utile pour la détection, égal au taux calculé pour la sphère de Bonner chargée en hélium-3. Par ailleurs, pour un rayon r = 1,4 cm, correspondant à un coût d'environ 600 € de gadolinium pur, on obtient un taux utile pour la détection $\tau_{Gd}$ égal à $(5,00 \pm 0,07)x10^{-4}$ c/n, qui est plus de 10 fois supérieur à celui que l'on obtient pour la sphère chargée en hélium-3. Le coût des matériaux pour un tel capteur est inférieur à 700 € et se compare donc avantageusement au prix d'un détecteur à hélium-3, compris entre 1000 € et 10000 €. Ces données de simulation justifient par conséquent l'intérêt de la présente invention en regard du compromis sensibilité/coût.

La figure 4 est une vue en coupe latérale schématique d'un mode de réalisation particulier du détecteur de neutrons, objet de l'invention.

Sur cette figure 4,

- la référence 2 représente un cœur sphérique, formé d'une boule 4 de matière hydrogénée, typiquement du polyéthylène, recouverte d'un dépôt de gadolinium ou de cadmium 6, de l'ordre de quelques millimètres d'épaisseur, typiquement 5 mm ou moins; en variante, le cœur 2 est formé d'un seul bloc sphérique de Gd ou de Cd sous forme oxydée ou métallique ; selon une autre variante, le cœur 2 est une couche sphérique de Gd ou de Cd, délimitant un espace qui est vide ou contient un matériau scintillateur ;
- la référence 8 représente une première couche de diffuseur de lumière, typiquement en Téflon®, qui recouvre le cœur 2 ;
- la référence 10 représente une coquille sphérique de scintillateur plastique standard, tel que le polystyrène ou le PVT (polyvinyltoluène), qui entoure la couche 8 et délivre un signal de scintillation rapide, cette coquille ayant une épaisseur de l'ordre de 10 à 15 cm; il convient de noter que la coquille 10 peut être faite d'un scintillateur modifié, permettant une discrimination neutron/gamma, de façon à discriminer les neutrons très rapides, d'énergie supérieure à 14 MeV, vis-à-vis de la signature gamma haute énergie des captures radiatives dans le gadolinium ou le cadmium ;
- la référence 12 représente une couche de scintillateur contenant du bore ou du lithium (en dopage ou en couverture), de l'ordre de 1 mm d'épaisseur, qui entoure la coquille 10; elle fournit une lumière de scintillation plus « lente » que la lumière de scintillation fournie par la coquille 10 : la constante de temps de la première est au moins dix fois plus grande que la constante de temps de la seconde ; cette couche 12 peut être un dépôt de ZnS/(LiF) ;
- la référence 14 représente une deuxième couche de diffuseur de lumière, typiquement en Téflon®, qui recouvre la couche 12 ;
- la référence 16 représente un dispositif de conversion de photons à gain, typiquement un photomultiplicateur, qui présente une interface avec la coquille 10 et qui convertit les photons de scintillation, issus de la coquille, en un signal représentatif de ceux-ci.

Il est à noter que, lorsque le cœur 2 est une couche sphérique de Gd ou de Cd délimitant un espace contenant un matériau scintillateur, ce matériau scintillateur est avantageusement choisi de manière à présenter une constante de temps distincte à la fois de celle de la couche 12 de scintillateur et de celle de la coquille 10 de scintillateur plastique.

Lorsque le cœur 2 est une couche sphérique de gadolinium ou de cadmium et contient un matériau scintillateur, il est nécessaire de prévoir une ou plusieurs ouvertures dans la couche sphérique de manière à laisser échapper les photons issus de la scintillation du matériau scintillateur vers le dispositif 16 de conversion de photons. En effet, le gadolinium et le cadmium sont opaques au rayonnement issu du matériau scintillateur. Le matériau scintillateur ne doit donc pas être entièrement recouvert de gadolinium ou de cadmium.

Sur la figure 4, on voit aussi :

- une alimentation de haute tension 18 du dispositif 16 ;
- un dispositif électronique 20 de traitement numérique du signal fourni par le dispositif 16 ; et
- une interface homme-machine 22, associée au dispositif 20.

Le détecteur de neutrons, représenté sur la figure 4, le dispositif électronique 20 et l'interface 22 constituent un exemple du dispositif de comptage, objet de l'invention.

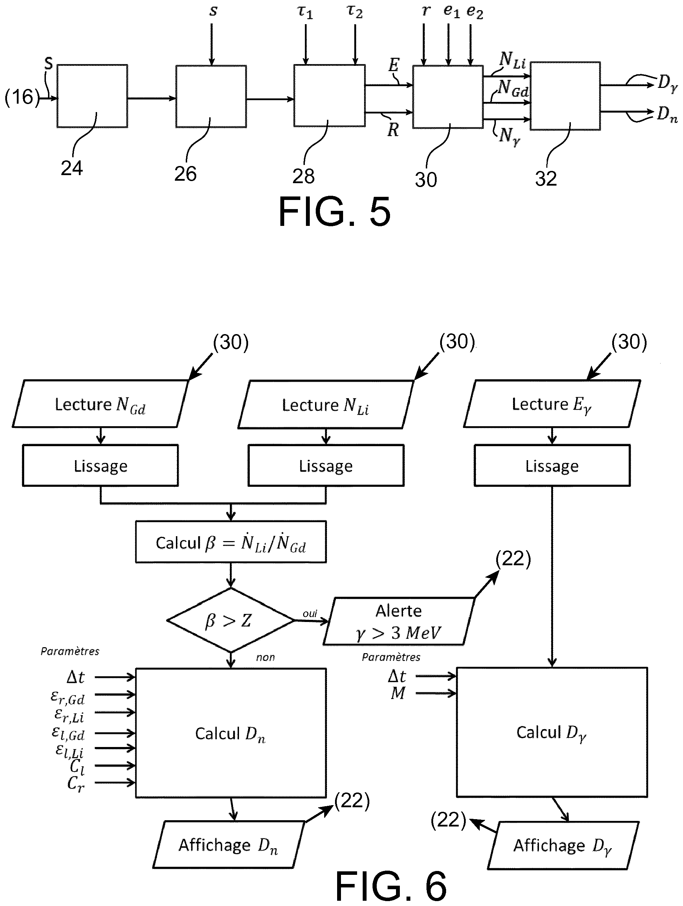

Le schéma fonctionnel du dispositif électronique 20, permettant le comptage neutronique, est représenté sur la Figure 5.

Sur la figure 5 :

- la référence S représente le signal provenant du dispositif de conversion de photons 16 ;
- la référence 24 représente un ADC, c'est-à-dire un convertisseur analogique-numérique qui numérise le signal S ;
- la référence 26 représente un discriminateur qui est paramétré par un seuil s ;
- la référence 28 représente un module PSD, c'est-à-dire un discriminateur de forme d'impulsion, qui est paramétré par deux constantes de temps $\tau_1$ et $\tau_2$ ;
- la référence 30 représente un compteur à trois voies qui sont respectivement paramétrées par trois seuils $\underline{r}$, $e_1$ et $e_2$; et
- la référence 32 représente une unité de traitement, destinée à estimer une dose neutronique et une dose gamma.

Le signal S issu du convertisseur 16, est donc analysé par le dispositif 20 représenté sur la figure 5. Dans un premier temps, le signal S est numérisé par l'ADC 24. Puis les impulsions fournies par ce dernier sont discriminées vis-à-vis du bruit par le discriminateur 26, paramétré par le seuil s. Chaque impulsion ainsi détectée est analysée par le module PSD 28 qui est paramétré par les deux constantes de temps $\tau_1$ et $\tau_2$. Le module 28 permet d'estimer la quantité d'énergie de la composante rapide et la quantité d'énergie de la composante lente qui sont respectivement notées $\varepsilon_r$ et $\varepsilon_l$. A titre d'exemple, ces deux quantités peuvent être estimées par simple intégration numérique de l'impulsion entre 0 et $\tau_1$ et entre $\tau_1$ et $\tau_2$. L'énergie totale $E$ est alors calculée par la formule $E = \varepsilon_r + \varepsilon_l$ et le rapport de discrimination $R$ est calculé par la formule

$$R = \frac{\varepsilon_l}{\varepsilon_r}.$$

Le compteur 30 à trois voies, paramétrées par les trois seuils $r$, $e_1$, et $e_2$, compte, pendant une durée $\Delta t$, les impulsions caractérisées par leurs paramètres $R$ et $E$, et incrémente les valeurs de comptage de la voie lithium $N_{Li}$, de la voie gadolinium $N_{Gd}$ et de la voie gamma $N_\gamma$ selon les règles suivantes :

$$Si\ R > r\ et\ E > e_1\ alors\ N_{Li} = N_{Li} + 1$$

$$Si\ R < r\ et\ E > e_2\ alors\ N_{Gd} = N_{Gd} + 1$$

$$Sinon\ N_\gamma = N_\gamma + 1\ \text{et}\ E_\gamma = E_\gamma + E.$$

Ey représente l'énergie E déposée par le rayonnement gamma dans la coquille scintillante 10.

Au bout de l'intervalle temporel $\Delta t$, les valeurs de comptage sont lues par l'unité de traitement 32 avant d'être remises à zéro.

Cette unité 32 constitue un aspect de l'invention qui est associé à la géométrie du détecteur représenté sur la Figure 4. L'algorigramme relatif à l'unité 32 est représenté sur la figure 6.

L'unité 32 réalise un traitement dédié afin d'estimer la dose neutronique et la dose gamma. Dans un premier temps, les données de comptage sont lissées afin de réduire le bruit de grenaille du signal ($\dot{N}_{Li} = lissage(N_{Li})$ et $\dot{N}_{Gd} = lissage(N_{Gd})$). A titre d'exemple, un filtre non linéaire peut être mis en oeuvre. Le ratio entre les deux voies $\beta = \dot{N}_{Li}/\dot{N}_{Gd}$ permet de détecter la présence éventuelle d'un champ gamma de haute énergie, rendant impossible la métrologie neutron. Si $\beta$ dépasse un certain seuil $Z$, un message d'alerte peut être généré. Considérons deux super-groupes en énergie, le premier entre 25 meV et 100 keV et le deuxième entre 100 keV et 50 MeV. Soit $\varepsilon_{r,Gd}$, $\varepsilon_{r,Li}$, $\varepsilon_{l,Gd}$, $\varepsilon_{l,Li}$, les efficacités de détection des neutrons lents (indice $\underline{l}$) ou rapides (indice $\underline{r}$) pour les voies Gd ou Li. L'efficacité de détection, exprimée en coups/cm$^2$, peut être estimée par simulation ou mesure d'étalonnage. On peut alors calculer les flux neutroniques lent et rapide qui sont respectivement notés $\varphi_r$ et $\varphi_l$:

$$\begin{cases} \varphi_l = \left[\dfrac{\varepsilon_{r,Gd}}{\varepsilon_{l,Li}\varepsilon_{r,Gd} - \varepsilon_{r,Li}\varepsilon_{l,Gd}}\right]\dfrac{\dot{N}_{Li}}{\Delta t} - \left[\dfrac{\varepsilon_{r,Li}}{\varepsilon_{l,Li}\varepsilon_{r,Gd} - \varepsilon_{r,Li}\varepsilon_{l,Gd}}\right]\dfrac{\dot{N}_{Gd}}{\Delta t} \\[4mm] \varphi_r = \left[\dfrac{\varepsilon_{l,Li}}{\varepsilon_{l,Li}\varepsilon_{r,Gd} - \varepsilon_{r,Li}\varepsilon_{l,Gd}}\right]\dfrac{\dot{N}_{Gd}}{\Delta t} - \left[\dfrac{\varepsilon_{l,Gd}}{\varepsilon_{l,Li}\varepsilon_{r,Gd} - \varepsilon_{r,Li}\varepsilon_{l,Gd}}\right]\dfrac{\dot{N}_{Li}}{\Delta t} \end{cases}$$

Les coefficients de conversion flux-dose sont déterminés à partir des données de ICPR103 (Publication 103 de la Commission Internationale de Protection Radiologique) de telle façon que : pour le domaine lent (25 meV à 100 keV) $C_l$ = **1,8 $pSv/cm^2$** et pour le domaine rapide (100 keV à 50 MeV) $C_r$ = **270 $pSv/cm^2$.**

Finalement, l'estimée de la dose neutronique est donnée par :

$$D_n = C_l\varphi_l + C_r\varphi_r$$

En outre, le signal gamma $N_\gamma$ est lissé ($\dot{N}_\gamma$ = **lissage($N_\gamma$)**) et une dose gamma $D_\gamma$ est estimée. Au premier ordre, on peut considérer que le coefficient de pondération du rayonnement est égal à 1 et que le plastique peut être considéré comme équivalent à l'eau (masse volumique et nombre de charges équivalents). Soit M la masse du scintillateur plastique (en kilogrammes). La dose $D_\gamma$ est donnée par la formule suivante où $E_\gamma$ est exprimée en joules :

$$D_\gamma = \frac{E_\gamma}{M\Delta t}$$

## Revendications

1. Détecteur de neutrons, comprenant :

   - un cœur (2), riche en gadolinium ou en cadmium,
   - une coquille (10) en scintillateur plastique, qui enveloppe le cœur (2), et
   - un dispositif de conversion de photons (16) qui présente une interface avec la coquille (10) et qui convertit les photons de scintillation, issus de la coquille, en un signal représentatif de ceux-ci,

   **caractérisé en ce qu'**il comprend en outre une couche (12) de scintillateur contenant du bore ou du lithium, qui entoure la coquille (10).

2. Détecteur selon la revendication 1, dans lequel le cœur (2) et la coquille (10) sont sensiblement sphériques et sensiblement concentriques.

3. Détecteur selon l'une quelconque des revendications 1 et 2, dans lequel l'épaisseur de la coquille (10) est supérieure ou égale à 10 cm.

4. Détecteur selon l'une quelconque des revendications 1 à 3, dans lequel l'épaisseur de la couche (12) de scintillateur contenant du bore ou du lithium est inférieure ou égale à 2 mm.

5. Détecteur selon l'une quelconque des revendications 1 à 4, comprenant en outre une première couche de diffuseur de lumière (8), interposée entre le cœur (2) et la coquille (10).

6. Détecteur selon l'une quelconque des revendications 1 à 5, comprenant en outre une deuxième couche de diffuseur de lumière (14), entourant la couche (12) de scintillateur contenant du bore ou du lithium.

7. Détecteur selon l'une quelconque des revendications 1 à 6, dans lequel le cœur (2) est plein.

8. Détecteur selon l'une quelconque des revendications 1 à 6, dans lequel le cœur (2) est creux et comporte une zone interne qui est vide ou contient un matériau thermalisant (4), pour la thermalisation des neutrons.

9. Détecteur selon l'une quelconque des revendications 1 à 6, dans lequel le cœur (2) est creux et comporte une zone interne qui contient un matériau scintillateur.

10. Détecteur selon la revendication 9, dans lequel le matériau scintillateur présente une constante de temps distincte d'une constante de temps de la coquille (10) en scintillateur plastique et distincte d'une constante de temps de la couche (12) de scintillateur contenant du bore ou du lithium.

11. Détecteur selon l'une des revendications 9 et 10, dans lequel le cœur (2) comporte une couche contenant du gadolinium ou du cadmium et présentant au moins une ouverture permettant le passage de photons de scintillation émis par le matériau scintillateur.

12. Dispositif de comptage de neutrons, notamment pour mesurer un débit de dose, comprenant :

- le détecteur de neutrons selon l'une quelconque des revendications 1 à 11, et
- un dispositif de traitement de signal (20) qui fournit un signal de comptage de neutrons, notamment un débit de dose, à partir d'un signal représentatif des photons de scintillation.

13. Dispositif selon la revendication 12, dans lequel le dispositif de traitement de signal (20) comprend des moyens de discrimination de forme, de comptage et de lissage d'impulsions, et d'estimation de débit de dose neutronique au moyen d'un modèle pseudo-spectral.

**Patentansprüche**

1. Neutronendetektor, umfassend:

- einen Kern (2), der reich an Gadolinium oder an Cadmium ist,
- eine Schale (10) aus Kunststoffszintillator, die den Kern (2) umhüllt, und
- eine Photonenumwandlungsvorrichtung (16), die eine Grenzfläche mit der Schale (10) aufweist, und die die Szintillationsphotonen, die aus der Schale stammen, in ein für diese repräsentatives Signal umwandelt,

**dadurch gekennzeichnet, dass** er ferner eine Szintillatorschicht (12) umfasst, die Bor oder Lithium enthält, die die Schale (10) umgibt.

2. Detektor nach Anspruch 1, bei dem der Kern (2) und die Schale (10) im Wesentlichen kugelförmig und im Wesentlichen konzentrisch sind.

3. Detektor nach einem der Ansprüche 1 und 2, bei dem die Dicke der Schale (10) größer oder gleich 10 cm ist.

4. Detektor nach einem der Ansprüche 1 bis 3, bei dem die Dicke der Szintillatorschicht (12), die Bor oder Lithium enthält, kleiner oder gleich 2 mm ist.

5. Detektor nach einem der Ansprüche 1 bis 4, ferner umfassend eine erste Lichtstreuschicht (8), die zwischen dem Kern (2) und der Schale (10) eingefügt ist.

6. Detektor nach einem der Ansprüche 1 bis 5, ferner umfassend eine zweite Lichtstreuschicht (14), die die Szintillatorschicht (12) umgibt, die Bor oder Lithium enthält.

7. Detektor nach einem der Ansprüche 1 bis 6, bei dem der Kern (2) massiv ist.

8. Detektor nach einem der Ansprüche 1 bis 6, bei dem der Kern (2) hohl ist und eine Innenzone umfasst, die leer ist oder ein thermalisierendes Material (4) zur Thermalisierung der Neutronen umfasst.

9. Detektor nach einem der Ansprüche 1 bis 6, bei dem der Kern (2) hohl ist und einen Innenzone umfasst, die ein Szintillatormaterial enthält.

10. Detektor nach Anspruch 9, bei dem das Szintillatormaterial eine Zeitkonstante aufweist, die verschieden ist von einer Zeitkonstante der Schale (10) aus Kunststoffszintillator, und verschieden von einer Zeitkonstante der Szintillatorschicht (12), die Bor oder Lithium enthält.

**11.** Detektor nach einem der Ansprüche 9 und 10, bei dem der Kern (2) eine Schicht umfasst, die Gadolinium oder Cadmium enthält, und die wenigstens eine Öffnung aufweist, die den Durchgang von Szintillationsphotonen ermöglicht, welche von dem Szintillatormaterial emittiert werden.

**12.** Neutronenzählvorrichtung, insbesondere für die Messung einer Dosisrate, umfassend:

- den Neutronendetektor nach einem der Ansprüche 1 bis 11, und
- eine Signalverarbeitungsvorrichtung (20), die ein Neutronenzählsignal, insbesondere eine Dosisrate, ausgehend von einem Signal liefert, das repräsentativ für die Szintillationsphotonen ist.

**13.** Vorrichtung nach Anspruch 12, bei dem die Signalverarbeitungsvorrichtung (20) Mittel zur Formdiskriminierung, zur Zählung und zur Glättung von Pulsen sowie zur Abschätzung der Neutronendosisrate mit Hilfe eines pseudospektralen Modells umfasst.

**Claims**

**1.** A neutron detector, comprising:

- a core (2), rich in gadolinium or cadmium,
- a plastic scintillator shell (10), which envelops the core (2), and
- a photon conversion device (16) which has an interface with the shell (10) and which converts scintillation photons from the shell into a signal representative thereof,

**characterized in that** it further comprises a scintillator layer (12) containing boron or lithium, which surrounds the shell (10).

**2.** The detector as claimed in claim 1, wherein the core (2) and the shell (10) are substantially spherical and substantially concentric.

**3.** The detector as claimed in any one of claims 1 and 2, wherein the thickness of the shell (10) is greater than or equal to 10 cm.

**4.** The detector as claimed in any one of claims 1 to 3, wherein the thickness of the scintillator layer (12) containing boron or lithium is 2 mm or less.

**5.** The detector as claimed in any one of claims 1 to 4, further comprising a first light diffuser layer (8), interposed between the core (2) and the shell (10).

**6.** The detector as claimed in any one of claims 1 to 5, further comprising a second light diffuser layer (14), surrounding the scintillator layer (12) containing boron or lithium.

**7.** The detector as claimed in any one of claims 1 to 6, wherein the core (2) is solid.

**8.** The detector as claimed in any one of claims 1 to 6, wherein the core (2) is hollow and has an inner zone which is empty or contains a thermalizing material (4), for the thermalization of neutrons.

**9.** The detector as claimed in any one of claims 1 to 6, wherein the core (2) is hollow and has an inner zone which is empty or contains a scintillator material.

**10.** The detector as claimed in claim 9, wherein the scintillator material has a time constant distinct from a time constant of the plastic scintillator shell (10) and distinct from a time constant of the scintillator layer (12) containing boron or lithium.

**11.** The detector according to one of claims 9 and 10, wherein the core (2) comprises a layer containing gadolinium or cadmium and having at least one opening allowing the passage of scintillation photons emitted by the scintillator material.

**12.** A neutron counting device, in particular for measuring a dose rate, comprising:

 - the neutron detector as claimed in any one of claims 1 to 11, and
 - a signal processing device (20) which provides a neutron count signal, in particular a dose rate, from a signal representative of scintillation photons.

**13.** The device as claimed in claim 12, wherein the signal processing device (20) comprises means for shape discrimination, pulse counting and smoothing, and neutron dose rate estimation by means of a pseudo-spectral model.

FIG. 1

FIG. 2

EP 3 452 850 B1

FIG. 3

FIG. 4

12

FIG. 5

FIG. 6

## RÉFÉRENCES CITÉES DANS LA DESCRIPTION

**Documents brevets cités dans la description**

- WO 2011012154 A

**Littérature non-brevet citée dans la description**

- **J. DUMAZERT ; R. COULON ; F. CARREL ; F. SGUERRA ; E. ROHÉE ; S. NORMAND ; L. MÉCHIN ; M. HAMEL.** Gadosphere : a high-scale plastic scintillator sphere with a metal gadolinium core for thermal neutron detection and counting. *IEEE Nuclear Science Symposium and Medical Imaging Conference (NSS/MIC),* 2015

- MCNPX User manual. Los Alamos Tech. rep., LA-CP-11-00438. 2011